# EUROPEAN PATENT APPLICATION

(11) **EP 1 571 793 A2**
(43) Date of publication of application: **07.09.2005**
(21) Application number: 05101365.4
(22) Date of filing: 23.02.2005
(51) Int. Cl.: H04L 12/58, H04Q 7/22

(54) **Method and device for managing stored messages**

(30) Priority: 02.03.2004 FI 20040335
(71) Applicant: Nokia Corporation, 02150 Espoo (FI)
(72) Inventor: Savilampi, Erkki, 33880, Lempäälä (FI)
(74) Representative: Smolander, Jouni Juhani

(57) **Abstract**

The present invention relates to managing storage of messages remotely. A first message relocation command is transmitted from a terminal to adaptation means receiving management commands from the terminal and defining management commands to the server. The adaptation means determine a second message relocation command based on the first message relocation command. The second message relocation command is transmitted from the adaptation means to the server. The server, based on the second message relocation command, relocates at least one message or a part of the message.

## Description

### FIELD OF THE INVENTION

The present invention relates to managing storage of messages, and more particularly to management of message stores in a system comprising a terminal, adaptation means, and a server.

### BACKGROUND OF THE INVENTION

The importance of enabling remote access to various information systems has increased. Especially for highly mobile professionals access to a company data system is important when they are not in the office. The importance of e-mail as communication means has created a need to enable remote access to an e-mail system and remote access to the e-mail system via a personal mobile station is very practical solution for this need.

There are remote e-mail access methods in which a connection from a mobile terminal is established to an e-mail server, and e-mail protocols are applied between the e-mail server and the terminal. However, such solutions are not suitable for all usage contexts and cannot be used by mobile te r-minals lacking appropriate e-mail protocol software. One remote access method available to an e-mail system enabling access without the need for support of e-mail protocols in the mobile terminal is a *Nokia One™* system which comprises an adaptation functionality for receiving e-mail management commands from the mobile terminal and for determining e-mail management commands to the server on the basis of the management commands from the mobile terminal. By this kind of solution the user may request e-mail messages as well as calendar entries from an e-mail server by transmitting short messages comprising appropriate commands (certain letters, e.g. "m" for fetching new mails) based on which the adaptation functionality typically residing in the mobile network then defines commands according to the protocol supported by the e-mail server. A list of e-mail message headers, extracted from e-mails residing on the user's e-mail account server, can be transmitted to the mobile terminal and the user may select one or more e-mail messages the body of which is then transferred to the mobile terminal.

However, there are situations, especially for users with a large number of incoming messages, in which the space reserved for the e-mail account quota for received messages in the e-mail system is quickly consumed. Thus, there is a need for more advanced tools for remotely managing e-mail messages.

### BRIEF DESCRIPTION OF THE INVENTION

There is a need to provide a method and an apparatus for implementing the method so as to improve remote management of storage of messages. This need may be fulfilled by a method, a system, a device, a module, and a computer program which are characterized by what is stated in the independent claims. Some embodiments of the invention are disclosed in the dependent claims.

According to an aspect of the invention, a first message relocation command is transmitted from a terminal to adaptation means receiving management commands from the terminal and defining management commands to the server. The adaptation means determine a second message relocation command based on the first message relocation command. The second message relocation command is transmitted from the adaptation means to the server. The server, based on the second message relocation command, relocates at least one message or a part of the message.

An advantage of the method and arrangement of the invention is that the messages in the message store may be remotely rearranged. This facilitates efficient management of personal information and enables the message store to be maintained in the order desired by the user when the user is only capable of accessing the message store remotely when travelling, for instance. The invention is especially useful when the space reserved for incoming messages is running out. The user may make space available by relocating messages to another location, e.g. as a compressed file.

According to another aspect, a first message processing rule is transmitted from the terminal to the adaptation means. The adaptation means determine a second message processing rule based on the first message processing rule and transmits the second message processing rule from the adaptation means to the server. The server processes messages according to the second message processing rule. This enables message processing rules to be defined remotely when the user is travelling, for instance, thereby further facilitating efficient management of a message store.

### BRIEF DESCRIPTION OF THE DRAWINGS

In the following, the invention will be described in greater detail by means of some embodiments with reference to the accompanying drawings, in which
Figure 1 illustrates a telecommunications system for arranging remote messaging management according to an embodiment of the invention;
Figures 2a and 2b illustrate some embodiments of the invention; and
Figure 3 illustrates another embodiment of the invention.

### DETAILED DESCRIPTION OF THE INVENTION

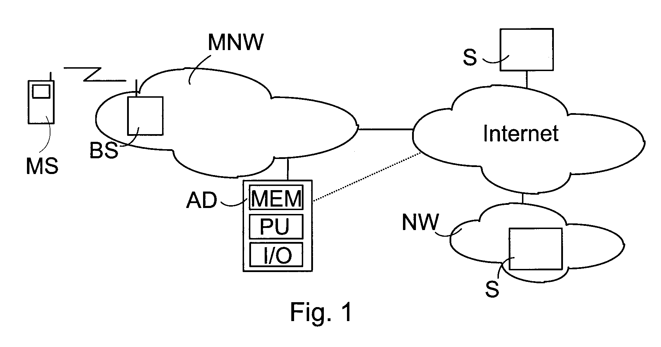

Figure 1 illustrates an exemplary telecommunications system comprising a server S arranged to control storage of messages, a mobile terminal MS, and an adaptation device AD arranged to receive management commands of a first type from the mobile terminal MS and to determine management commands of a second type for the server S on the basis of the management commands from the mobile terminal MS. Data may be transmitted to/from the MS by base station BS of a mobile network MNW. Adaptation device AD may be included in the MNW or connected thereto. Conventional mobile network elements and functions may be included in the MNW. For instance, the MNW may support GSM (Global System for Mobile Communications), GPRS (General Packet Radio Service), 3GPP (3^{rd} Generation Partnership Project) or WLAN (Wireless Local Area Network) standards. The server S may reside in another network NW, for instance in a secure intranet, typically accessible by Internet. The system illustrated in Figure 1 is only exemplary, and the invention can be applied to any kind of system comprising a server, a mobile terminal, and an adaptation means. The terminal MS may be any mobile electronic device equipped with a transceiver, for instance a laptop or a desktop computer, a PDA device or a mobile station.

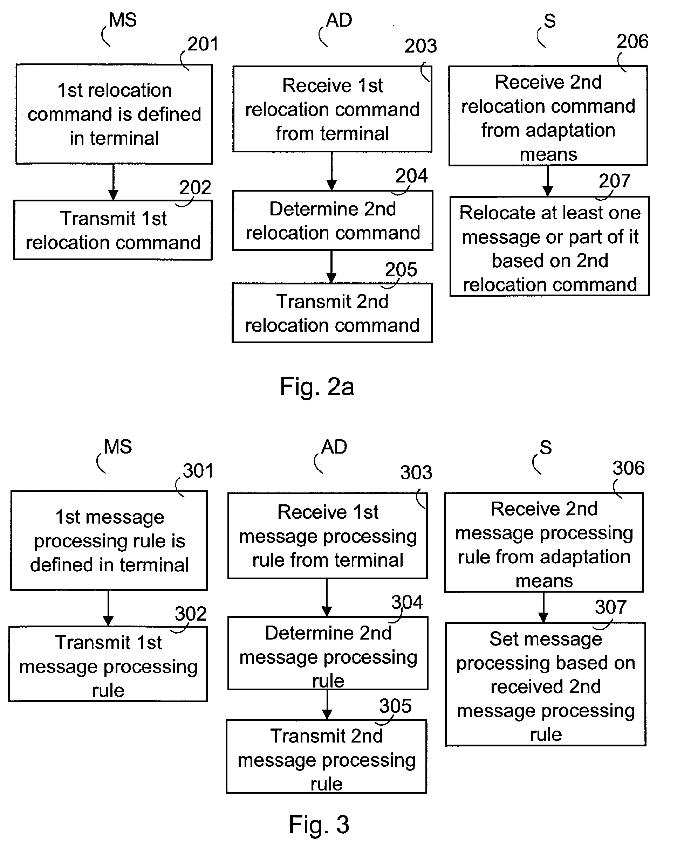

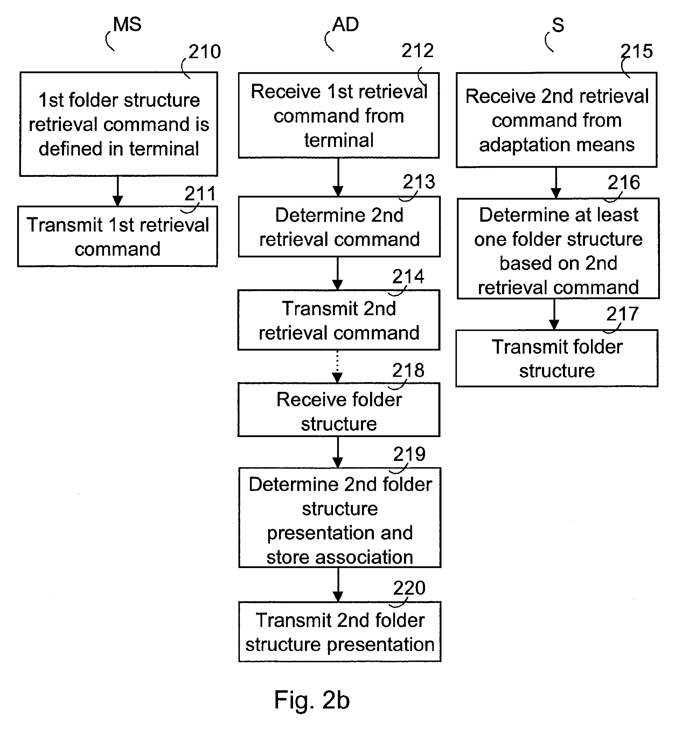

The device(s) to which at least some of the inventive functionality may be applied, in the example of Figure 1 the AD, comprise(s) memory MEM, data transmission means I/O, and a processing unit PU comprising one or more processors. By means of a computer program code executed in the processing unit PU and/or hardware solutions, the device(s) can be arranged to implement inventive functions related to the management of messages, some embodiments of which being illustrated in Figures 2a, 2b, and 3. The device implementing the functions associated with the adaptation device (AD) can be arranged to provide features relating to adaptation of commands for relocation of messages and/or adaptation of message processing rules. Computer program codes can be received via a network and/or be stored in memory means, for instance on a disk, a CD-ROM disk or other external memory means, from where they can be executed or loaded into the memory of the processing device. A chip unit or some other kind of module for controlling a data processing device (AD) may in one embodiment cause the device to perform inventive functions. The module may form a part of the device AD and it may be removable, i.e. it can be inserted into another unit or device. In one embodiment, the functions of the AD are implemented in the server S. It is to be noted that more than one computer may provide the features of the AD which may function as a server for many mobile terminals. There may be also further functionalities such as firewall, tunneling and/or gateway functionalities associated with or included in the device(s) implementing AD features for arranging secure data transmission between the MS and the AD and the AD and the server S. In one embodiment AD is arranged to perform features related to user authentication with the server S based on the user information received from the terminal MS or stored in the AD and retrieved based on MISDN number received from the mobile network element (e.g. from a short messaging service centre). User tailored services may be arranged by the AD based on predetermined user profile.

Figure 2a is a flow chart illustrating an embodiment for remotely relocating messages. The blocks on the left-hand side are those implemented in a mobile terminal MS, the blocks in the middle are to be implemented in an adaptation device AD, and the blocks on the right-hand side are to be implemented in a server S. In step 201, a first message relocation command is defined in the terminal MS. In step 202 the first message relocation command is transmitted from the mobile terminal MS to the adaptation device AD. The AD receives 203 the first message relocation command and determines 204 a second message relocation command based on the first message relocation command. This step requires that adaptation logic or instructions should be pre-stored in the AD. These instructions may be stored as look-up tables or implemented by software-implemented logic, for instance.

In step 205, the second message relocation command is transmitted from the adaptation device AD to the server S. The server S receives 206 the second message relocation command and relocates 207 at least one message or a part thereof on the basis of the second message relocation command. The message may be relocated to another memory location in the device or even to another device.

The above-described method enables the use of a first protocol for relocating messages between the mobile terminal MS and the adaptation device AD, and the use of a second protocol between the adaptation device AD and the server S. Thus, the different properties of the devices, already existing technologies and/or the properties of the underlying data transmission technologies can be taken into account. For instance, the already existing protocols and the message relocation commands defined therein can be utilized between the AD and the server S, and new message relocation commands most suitable for the MS (user) can be used between the MS and the AD.

Figure 2b is a flow chart illustrating an embodiment relating to retrieval of a folder structure to the terminal MS. The method of Figure 2b may be implemented in connection with the one in Figure 2a, more specifically before the method of Figure 2a is implemented. In step 210, a first message folder structure retrieval command is defined in the mobile terminal MS, the command then being sent 211 from the mobile terminal MS to the adaptation device AD.

The adaptation device AD determines in step 213 a second message folder structure retrieval command based on the first message folder structure retrieval command. The second message folder structure retrieval command is transmitted 214 to the server S. When the server S receives 215 the command, it determines 216 at least one folder structure (containing at least one folder) on the basis of the received second message folder structure retrieval command. After this, the server S transmits 217 the folder structure.

In one embodiment, the folder structure is sent to the mobile terminal MS without intervention by the adaptation device AD. In an alternative embodiment illustrated in Figure 2b, the server S transmits in step 217 the folder structure to the adaptation device AD. The AD receives the folder structure in step 218 and determines 219 a second folder structure presentation and stores any association between the received folder structure and the second folder structure presentation. Thus, the AD may, for instance, arrange the folders as a list and form a look-up table associating the folder names defined in the received folder structure with the respective identifiers (for instance numbers or letters) of the second folder structure presentation.

In step 220, the adaptation device AD sends the second folder structure presentation to the mobile terminal MS. The MS, in both embodiments, may then receive the folder structure presentation and present it to the user. Based on a user selection or input, a first relocation command may be created, for instance using the method illustrated in Figure 2a. The user may use the same folder identifiers or symbols as were used in the received folder structure and the AD is in step 204 arranged to determine, based on the stored association, the corresponding folder identifier to be included in the second message relocation command.

This embodiment enables the folder structure to be retrieved to be shown to the user by including the relocation command, which makes it easier for the user to define the relocation command, so less errors are likely to occur. Further, if the folders can be identified, for instance, by numbers, the identification of the correct folder(s) can be made even easier. By this embodiment, the folder structure presentation may be modified according to the properties of the mobile terminal MS. For instance, if the mobile terminal MS is a device with a small display, the folder structure presentation may be minimized into a simple numbered list of folder names which may be shortened to better adapt to the MS display.

In the following, an example is given on utilizing some of the above-illustrated features. Let us assume that the user of the mobile station MS has a network drive where he or she stores several personal folders, such as:
Work.PST, where the user stores generic e-mail items relating to his or her job,
ProjectX.PST, e-mail items relating to ProjectX he or she is working on,
Private.PST, private e-mail items,
Hobbies.PST, hobby related e-mail items,
Misc.PST, miscellaneous e-mail items.

The user may have a plurality of folders in each PST file, for example ProjectX.PST may contain three hierarchical levels of folders:
[root]
HW
RAM
ROM
SW
Ul
Change Requests
IPR

The user could request the system to provide a list of PST files stored in his home directory and further a folder list within one of the PST files. A command "ListPST" may be sent (step 211 in the embodiment of Figure 2b) to the AD and the AD responds (step 220) with the following concise list:
A. Work.PST
B. ProjectX.PST
C. Private.PST
D. Hobbies.PST
E. Misc.PST

The user may then need the folder hierarchy of one of the PST files, and for this purpose a command "B folders" is sent to the AD. The AD may then respond with the following list also including the subfolders:
B.0 root
B.1 HW
B.1.2 RAM
B.1.3 ROM
B.2 SW
B.2.1 Ul
B.2.2 Change Requests
B.3 IPR

The user may then want to move a first e-mail from Inbox to "IPR" folder. For this purpose, a command "1 Move B.3" is issued and transmitted to the AD, "1" indicating that the command concerns the first e-mail message. The AD determines a second e-mail processing command based on the received command and sends the second command to the e-mail server S. The server S then moves the first mail in a current list to the folder named "IPR" in the file ProjectX.PST. Using this method, as the e-mail is moved from INBOX to the PST file, the system may, in addition to adding a new mail item which notifies the user of the moved e-mail and its new location, in one embodiment also add a new task item to the users task list (to-do list) for reminding the user of the mail. There are also other feasible additional and/or alternative features relating to the relocation of the message: the original e-mail may be modified, an attachment file may be removed, or a resource identifier (pointing to the new location of the original e-mail message) may be added to the location of the original e-mail. The task list could be a task list within said PST file.

As illustrated in the above example, the selection of the folder can be made very easy for the user. The above-illustrated features are especially useful when the user is only capable of accessing a message store remotely and the message storage space is running out or when the user is expecting an e-mail with many attachments, for instance. Further, those who prefer organizing their e-mails well, may manually move all read e-mails, after reading them, or e-mails fulfilling other criteria, such as <received from [mail address]>, <subject contains [text]>, to a PST folder, especially if they receive a lot of e-mails on a daily basis. This is especially advantageous if the user accesses his/her e-mails by a mobile station using a bandwidth limited data transfer service, in which case updating of large number of e-mail headers alone takes a long time: As e-mails may be relocated from the Inbox, less data is required to be transferred to the mobile station thereby also enabling the costs for the telecommunications services to be reduced. Further advantages are achieved by reduced processing and memory consumption in the terminal device.

Figure 3 illustrates another embodiment of the invention which may be utilized independently or in addition to the embodiments illustrated above in connection with Figure 2a and/or 2b. In step 301, a first message processing rule is defined in the terminal MS. In step 302, the first message processing rule is transmitted from the mobile terminal MS to the adaptation device AD. The AD receives 303 the first message processing rule and determines 304 a second message processing rule based on at least part of the first message processing rule. It is to be noted that at least part of the rule is thus changed into a format understood by the server S but some part of the first rule may be incorporated into the second rule as such and/or some part may not be incorporated into the second rule. In step 305, the second message processing rule is transmitted from the adaptation device AD to the server S. The server S receives 306 the second message processing rule and arranges 307 the processing of messages according to the second message processing rule.

Some examples of rules that may be defined by the above method are auto-forwarding of incoming/sent messages, automatic reply to incoming messages, notifications when a message with specified contents/sender is received, and automatic deletion of incoming messages with specified contents/sender. Also, further file folder actions can be defined, such as "Create-folder Out of Office", which would create a folder "Out of Office" to Work.PST file, for instance, where e-mails can be delivered while the user is not reading his/her e-mails. Another example is "CreatePST Vacation.PST", which would create a new PST file called "Vacation.PST", to which certain e-mails are delivered while the user is on vacation.

By this embodiment, some or all of the different rule types supported by the server S can be defined remotely by the mobile terminal MS. For instance, customized rules may be defined by short messages to an IMAP (Internet Message Access Protocol) compliant e-mail server. This embodiment facilitates organization of messages and enables the space reserved for incoming messages to be used efficiently by applying automatic forwarding of e-mail distribution list messages, for instance.

The rule typically comprises a command portion and a specifying portion. For instance, an automatic reply rule may be specified as:
CR subj:" The *Memory chip"* Rw: "*Dear [sender]*, *please call me!"*

'CR subj:' and 'Rw' define the command portion of the rule (CR stands for Create Rule, Rw stands for Reply With). The command 'CR subj:' defines that a rule concerning subject fields comprising the characters *"The Memory chip"* (which is the specifying portion for the command 'CR subj:') is to be created and the 'RW' defines that the messages complying with this condition are to be replied with message comprising the *"Dear [sender], please call me!*" (which is the specifying portion for the command 'CR'). In this example, the AD may convert the commands 'CR subj:' and `RW' into respective commands supported by the server S. Further, the server S arranges an e-mail processing rule such that an e-mail arriving with a subject line "The memory chip" will be replied to with a special message: "Dear [sender], please call me!". In one further embodiment, the contents of the [sender] field is obtained from the sender name or the sender's e-mail address of the arrived e-mail item.

According to an embodiment, at least some of the above-illustrated features are utilized before applying the method in Figure 3. For instance, the list of available folders is sent to the mobile terminal as illustrated in Figure 2b. The rule may define a folder and the AD is arranged to determine the folder in the second rule (step 304) based on the folder identifier associated earlier with the identifier in the (first) rule in the message received from the MS.

The server S may be arranged to send an acknowledgement message after step 307 confirming that the requested rule was created, or, in the case of error or unrealisable request, a message informing that the rule was not created. This message may be sent via the adaptation device AD.

In one embodiment, at least a part of the above-illustrated features is applied for managing storage of e-mail messages. Thus, the server S may be an e-mail server. The invention enables already available and used e-mail protocols to be applied between the adaptation device AD and the e-mail server S. One such protocol is IMAP; for further details on IMAP reference is made to IETF RFC (request for comments) document 3501 *"INTERNET MESSAGE ACCESS PROTOCOL - VERSION 4rev1*", M. Crispin, March 2003. However, also other e-mail protocols may be applied.

In the following, an example of message relocation is illustrated by referring to IMAP commands. As a response to a first message relocation command from the terminal MS, the adaptation device AD is (in step 204 of Figure 2a) arranged to form COPY command "COPY 2:4 MEETING" when the first message relocation command indicates that messages 2-4 need to be relocated to folder "MEETING". This command is sent to a server S. The COPY command is described in Chapter 6.4.7 of the above-mentioned IETF specification. The server S replies with "OK COPY completed" if the messages were successfully copied to the folder "MEETING". There is a tag, a running number, for instance, in the beginning of each command and the response of the server S is identified by the same tag.

In the same message as the COPY command, or in a following message, the AD may be arranged to define a DELETE command (Chapter 6.3.4 in said specification) in which the copied messages 2-4 are deleted from their original locations. Instead of running numbers, UlDs (Unique Identifier) may be used to identify; this is also explained in said IETF specification.

In one embodiment, the relocation command may specify that the message should be relocated to an FTP site specified in the relocation command. Upon receiving the command in step 206, the e-mail server S moves (207) the e-mail via FTP to the requested FTP site and further replaces the e-mail in the Inbox with an e-mail having the same subject and a link to the URI (Uniform Resource Identifier) from where the e-mail can be found. This makes it easier for the user to download the e-mail when he or she is back in the office.

According to an embodiment, information on the new location of the e-mail is stored in the e-mail system for instance after step 207 in Figure 2a. This information can be stored as an e-mail message comprising a URI to the current location of the relocated e-mail. This kind of "pointer" e-mail message may be stored automatically each time an e-mail message is relocated. Thus, when the user again uses his or her conventional e-mail view, he or she can quickly track the relocated message.

According to another embodiment, a functionality for reinstating the e-mail item back to the original location (for instance in the Inbox folder) is provided in the e-mail system. This reinstatement functionality may be provided by a button in a remark e-mail message replacing the original and relocated e-mail message, for instance. The user may simply by pressing this button remit the original e-mail message to the original location. The server S may be arranged, based on an indication that the button was pressed, to determine the new location of the message, retrieve the original message from this location, store it in the original location, and delete the remark e-mail message. This feature may also allow the user to specify another e-mail folder, such as a personal e-mail folder, where the e-mail message will be downloaded and reinstated. Another example is that a push of the button only causes the message to be retrieved, i.e. makes the message easier to find, and the original message does not need to be reinstated. The above-described additional features can also be applied to management of other types of messages.

Besides or in addition to managing e-mail messages, at least some of the above-illustrated features may be applied to managing storage of other types of messages. For instance, remote management of calendar entries, contacts and/or action list (to-do list) entries may be arranged by the above-illustrated features.

A messaging service, such as an MMS (Multimedia Messaging Service), an SMS (Short Message Service) or an EMS (Enhanced Messaging Service) may be applied to transferring at least some of the above-illustrated commands and/or rules between the mobile terminal MS and the adaptation device AD. Thus, the above-illustrated functions of the AD may be implemented in a short messaging service centre (which may actually be integrated into the mobile services switching centre) or a network element arranged to provide the MMS or EMS. In another embodiment messages are transferred between the AD and the short messaging service centre via an SMS gateway. For instance, the AD may comprise first gateway functionality for data transmission to/from the short messaging service centre and second gateway functionality for data transmission to/from the server S. Also HTTP(S) and WAP protocols may be utilized for arranging data transmission between the MS and the AD.

Some packet-switched data transmission services that can be applied include GRPS or a WLAN access. According to a further embodiment, at least some of the commands and/or rules are transferred by a circuit-switched connection. Thus, the commands may be voice-based or DTMF (Dual Tone Multi-Frequency)-based. The adaptation device AD may comprise one or more gateway functionalities arranging adaptation of data transfer between the AD and the MS. It is also to be noted that there are many transmission service choices which may be utilized between the MS and AD, especially if the AD resides in the same network (NW) or even in the same device as the server S.

The above mentioned or some other circuit-switched and/or packet-switched transmission technologies may be used to transmit the commands and/or rules between the adaptation device AD and the server S. The data transfer may be arranged by a Telnet connection, for instance. In another embodiment, the connection is arranged by a secure protocol, such as an SSH (Secure Shell). The AD and the S in one embodiment communicate using an HTTP, the server S may comprise a WWW server, for instance.

It will be obvious to a person skilled in the art that as technology advances, the inventive concept can be implemented in various ways. The invention and its embodiments are not limited to the examples described above but may vary within the scope of the claims.

## Claims

1. A method of managing storage of messages remotely by a terminal in a system comprising a server for controlling the storage of messages and adaptation means for receiving management commands from the terminal and for determining management commands to the server on the basis of the management commands from the terminal, **characterized by**
transmitting (202) a first message relocation command from the terminal to the adaptation means,
determining (204) by the adaptation means a second message relocation command based on the first message relocation command,
transmitting (205) the second message relocation command from the adaptation means to the server, and
relocating (207) at least one message or a part thereof by the server based on the second message relocation command.

2. A method as claimed in claim **1, characterized by**
transmitting a first message folder structure retrieval command from the terminal to the adaptation means,
determining by the adaptation means a second message folder structure retrieval command based on the first message folder structure retrieval command,
transmitting the second message folder structure retrieval command from the adaptation means to the server,
determining a folder structure in the server based on the second message folder structure retrieval command, and
transferring the folder structure to the terminal.

3. A method as claimed in claim 2, **characterized in that**
the folder structure is transmitted from the server to the adaptation means,
the adaptation means determines a second folder structure presentation identifying one or more folders based on the received folder structure, and stores any association between the received folder structure and the second folder structure presentation, and
the adaptation means send the second presentation to the terminal.

4. A method as claimed in claim 3, **characterized in that**
the first message relocation command comprises a folder identifier,
whereby the adaptation means determine, based on the stored association, the corresponding folder identifier to be included in the second message relocation command.

5. A method as claimed in any one of the preceding claims,
**characterized by**
transmitting a first message processing rule from the terminal to the adaptation means,
determining by the adaptation means a second message processing rule based on the first message processing rule,
transmitting the second message processing rule from the adaptation means to the server, and
processing messages by the server according to the second message processing rule.

6. A method as claimed in claim 5, **characterized in that** the first message processing rule and the second message processing rule define at least one action and at least one message property, whereby the server is arranged to process messages having the message property defined in the rule the according to the action set in the second message processing rule.

7. A method as claimed in any one of the preceding claims, **characterized in that** the method is applied to managing storage of e-mail messages.

8. A method as claimed in any one of the preceding claims, **characterized in that** the first relocation command is transmitted by a message such as an SMS (Short Message Service) message.

9. A remote message storage management system comprising a server for controlling storage of messages, and adaptation means for receiving management commands from a terminal and for determining management commands to the server on the basis of the management commands from the terminal, **characterized in that**
the adaptation means are arranged to determine (204) a second message relocation command based on the first message relocation command,
the adaptation means are arranged to transmit (205) the second message relocation command to the server, and
the server is arranged to relocate (207) at least one message or a part thereof based on the second message relocation command.

10. A data processing device comprising adaptation means for determining, on the basis of management commands from a terminal, management commands for a server controlling storage of messages, **characterized in that**
the adaptation means are arranged to receive (203) a first message relocation command from the terminal,
the adaptation means are arranged to determine (204) a second message relocation command based on the first message relocation command, and
the adaptation means are arranged to transmit (205) the second message relocation command to the server.

11. A data processing device according to claim 10, **characterized in that**
the adaptation means are arranged to receive a first message folder structure retrieval command from the terminal,
the adaptation means are arranged to determine a second message folder structure retrieval command based on the first message folder structure retrieval command,
the adaptation means are arranged to transmit the second message folder structure retrieval command to the server.

12. A data processing device according to claim 11, **characterized in that**
the adaptation means are arranged to receive a folder structure from the server,
the adaptation means are arranged to determine a second folder structure presentation identifying one or more folders based on the received folder structure and store any association between the received folder structure and the second folder structure presentation, and
the adaptation means are arranged to send the second presentation to the terminal.

13. A data processing device according to claim 12, **characterized in that**
the first message relocation command comprises a folder identifier, whereby the adaptation means are arranged to determine, based on the stored association, the corresponding folder identifier to be included in the second message relocation command.

14. A data processing device according to any one of claims 10 to 13, **characterized in that**
the adaptation means are arranged to receive a first message processing rule from the terminal,
the adaptation means are arranged to determine a second message processing rule based on the first message processing rule, and
the adaptation means are arranged to transmit the second message processing rule to the server.

15. A data processing device according to any one of claims 10 to 14, **characterized in that**
the adaptation means are arranged to determine e-mail message relocation rules and/or e-mail message processing rules.

16. A data processing device according to any one of claims 10 to 15, **characterized in that** the adaptation means are arranged to receive the first relocation command in a message such as an SMS (Short Message Service) message.

17. A module for controlling a data processing device, **characterized in that**
the module is arranged to cause the data processing device to receive (203) a first message relocation command from a terminal,
the module is arranged to cause the data processing device to determine (204) a second message relocation command based on the first message relocation command, and
the module is arranged to cause the data processing device to transmit (205) the second message relocation command to a server.

18. A computer program product for controlling a data processing device by executing a program code included in the computer program product in a processor of the data processing device, **characterized in that** the computer program product comprises:
a program code portion for causing the data processing device to receive (203) a first message relocation command from a terminal,
a program code portion for causing the data processing device to determine (204) a second message relocation command based on the first message relocation command, and
a program code portion for causing the data processing device to transmit (205) the second message relocation command to a server.
